# EUROPÄISCHE PATENTSCHRIFT

(11) **EP 0 460 419 B1**
(45) Veröffentlichungstag und Bekanntmachung des Hinweises auf die Patenterteilung: **03.01.1996**
(21) Anmeldenummer: 91107443.3
(22) Anmeldetag: 08.05.1991
(51) Int. Cl.: C08G 65/44, C08K 5/09, C08K 5/20

(54) **Verfahren zur Herstellung von Polyphenylenethern**
Process for the preparation of polyphenylene ethers
Procédé pour la préparation de poly(éthers de phénylène)

(30) Priorität: 16.05.1990 DE 4015653
(43) Veröffentlichungstag der Anmeldung: 11.12.1991
(73) Patentinhaber: BASF Aktiengesellschaft, D-67063 Ludwigshafen (DE)
(72) Erfinder: Hedtmann-Rein, Carola, Dr., W-6945 Hirschberg (DE); Czauderna, Bernhard, Dr., W-6945 Hirschberg (DE); von Deessen, Martina, Dr., W-6720 Speyer (DE); Hennig, Karl, W-6717 Hessheim (DE)

(56) Entgegenhaltungen:
- EP-A- 0 232 701
- EP-A- 0 263 590
- FR-A- 1 574 937
- US-A- 4 130 504

## Beschreibung

Die Erfindung betrifft ein verbessertes Verfahren zur Herstellung von Polyphenylenethern aus einwertigen Phenolen, die in den beiden ortho-Stellungen oder zusätzlich in einer meta-Position, nicht aber in para-Stellung Alkylsubstituenten aufweisen, durch oxidative Kupplung mit sauerstoffhaltigen Gasen in Gegenwart eines Oxidationskatalysators und einer elektrisch leitfähigen, der elektrostatischen Aufladung des Reaktionsgemisches entgegenwirkenden Verbindung in organischer Lösung.

Polyphenylenether und Verfahren zu deren Herstellung sind in den US-Patentschriften 3 306 874, 3 306 875 und 3 432 466 offenbart. Abwandlungen des Verfahrens zum Herstellen dieser Polymere sind in den US-Patentschriften 3 384 619, 3 639 656, 3 642 699, 3 661 848 und 3 733 299 beschrieben.

Die für die Herstellung von Polyphenylenethern verwendeten Verfahren basieren vorwiegend auf der Selbstkondensation eines monovalenten Phenols in Anwesenheit eines sauerstoffhaltigen Gases und eines Katalysators.

Dabei führt die Begasung des Reaktionsgemisches mit Sauerstoff-Stickstoffgemischen zu sicherheitstechnischen Problemen, da ein leicht explosionsfähiges Gasgemisch in der Lösung entsteht. Insbesondere bei der sich im Laufe der Reaktion erhöhenden Viskosität der Reaktionslösung ist ein Anstieg der elektrostatischen Aufladung unvermeidlich, welche ab einem gewissen Grenzwert des elektrischen Widerstandes in der Lösung zur Explosion des Gasgemisches führen kann.

Aus der DE-A 3 600 611 und der DE-A 3 600 610 sind Antistatika für die Ethylenpolymerisation bekannt.

Polyethylen wird bekanntlich bei hohen Drücken und höheren Temperaturen hergestellt, wobei die Reaktion von gasförmigem Monomeren und Feststoffkatalysator in einem geeigneten Reaktor durchgeführt wird. Die Verfahrensbedingungen sind somit nicht mit einer Flüssig-Gas-Reaktion bei Normaldruck und Raumtemperatur zur Herstellung des Polyphenylenethers vergleichbar. Darüber hinaus verbleibt das Antistatikum im Polyethylen, während es bei der Polyphenylenethersynthese wünschenswert ist, diesen Zusatz nach der Polymerisation möglichst vollständig zu entfernen.

Der vorliegenden Erfindung lag daher die Aufgabe zugrunde, eine elektrisch leitfähige Verbindung für die Polyphenylenetherherstellung zur Verfügung zu stellen, die in geringen wirksamen Mengen einer elektrostatischen Aufladung der Reaktionslösung entgegenwirkt, und problemlos bei der Aufarbeitung der Polymerlösung wieder entfernt werden kann.

Demgemäß wurde ein Verfahren zur Herstellung von Polyphenylenethern aus einwertigen Phenolen, die in den beiden ortho-Stellungen oder zusätzlich in einer meta-Position, nicht aber in para-Stellung Alkylsubstituenten aufweisen, gefunden, durch oxidative Kupplung mit sauerstoffhaltigen Gasen in Gegenwart eines Oxidationskatalysators und einer elektrisch leitfähigen, der elektrostatischen Aufladung des Reaktionsgemisches entgegenwirkenden Verbindung in organischer Lösung, wobei man als elektrisch leitfähige Verbindung ein Carbonsäureamidderivat der allgemeinen Formel I 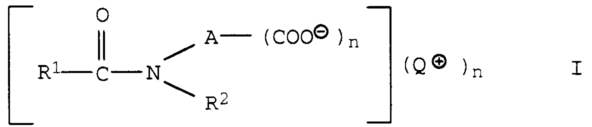 oder Gemische dieser Verbindungen verwendet, in der die Substituenten folgende Bedeutung haben:
- R¹: eine gesättigte oder ein- oder mehrfach ungesättigte aliphatische Gruppe, die eine endständige Phenylgruppe oder Hydroxylgruppe tragen kann und die insgesamt 8-30 C-Atome enthält, wobei diese C-Atome auch durch isolierte C-Atome unterbrochen sein können,
- R: Wasserstoff oder eine C₁- bis C₄-Alkylgruppe,
- A: ein aliphatisches, araliphatisches oder cycloaliphatisches oder aromatisches Brückenglied mit bis zu 10 C-Atomen, und
- n: für eine Zahl von 1 bis 3 steht,
- Q^{⊕}: Ammonium, ein Alkalimetallkation oder ein Äquivalent eines Erdalkalimetallkations oder eines Kations eines Metalls der IV. bis VII. Nebengruppe des Periodensystems.

Die definitionsgemäßen Reste R¹ können gerad- oder verzweigtkettige, ungesättigte oder gesättigte Alkylgruppen sein, die insgesamt 8-30, vorzugsweise 10-24 und insbesondere 12-20 C-Atome enthalten, die zur Erhöhung der Löslichkeit in dem Reaktionsgemisch eine endständige Phenylgruppe enthalten können. Beispiele für derartige Reste R¹ sind Alkylketten gesättigter Fettsäuren.

Unter diesen Resten R¹ kommen insbesondere solche in Betracht, die Alkylreste von ungesättigten Fettsäuren wie ölsäure, Linolsäure, Linolensäure oder Eleostearinsäure darstellen, da die Löslichkeit von Verbindungen I mit diesen Resten im Reaktionsgemisch besonders gut ist.

Weitere geeignete Reste R¹ sind solche, die sich von Hydroxycarbonsäuren als Säuren R¹COOH ableiten und deren Hydroxylgruppen beispielsweise mit Ethylenoxid oder 1, 2-Propylenoxid oxalkyliert wurde. Der Oxalkylierungsgrad beträgt hierbei vorzugsweise 4-8.

Als Reste R kommen Wasserstoff und C₁-C₄-Alkylreste in Betracht, wobei Wasserstoff und die Methylgruppe besonders bevorzugt sind.

Bevorzugte Brückenglieder A sind aliphatische und aromatische mit bis zu 10, bevorzugt bis zu 8 C-Atomen, wobei die Phenylengruppe oder Methylen- oder Ethylen- sowie Propylenreste als Brückenglieder besonders bevorzugt sind.

n bedeutet eine ganze Zahl von 1-3, wobei eine Carbonsäuregruppenanzahl von 1 bevorzugt ist, bei einem Phenylenbrückenglied kommen auch 2 oder 3 Substitutionen des Phenylenringes durch Carbonsäuregruppen in Betracht.

Q^{⊕} bedeutet definitionsgemäß Ammonium, ein Alkalimetallkation oder ein Äquivalent eines Erdalkalimetallkations oder eines Kations eines Metalls der IV bis VII Nebengruppe des Periodensystems. Bevorzugte Metallkationen sind Natrium, Calcium und Chrom-III sowie Kalium, Magnesium und Mangan (III).

Bevorzugte Verbindungen der allgemeinen Formel I sind Tris(oleoyl-N-methylglycinat) Chrom(III), Calciumdi(oleoylanthranilat) und Natrium(oleoyl-N-methyl-glycinat), die allein oder in Mischung eingesetzt werden können, wobei das Mischungsverhältnis beliebig ist. Bevorzugt sind jedoch die beiden erstgenannten Salze in äquimolarer Mischung dieser Salze.

Die Verbindungen der allgemeinen Formel I sind in der Regel in Mengen von 1·10⁻⁴ bis 0,1, vorzugsweise von 3·10⁻⁴ bis 0,035 und insbesondere von 3·10⁻⁴ bis 7·10⁻³ Gew.-%, bezogen auf 100 Gew.-% der gesamten Reaktionsmasse, enthalten.

Bevorzugt wird die elektrisch leitfähige Verbindung I in Lösung eingesetzt. Als Lösungsmittel kommen vorzugsweise Paraffinöle, insbesondere C₉-C₁₁-Paraffine in Betracht.

Die elektrisch leitfähige Verbindung I ist vorzugsweise in Mengen von 25 bis 40 Gew.-%, insbesondere von 30 bis 35 Gew.-% im Lösungsmittel enthalten. Um die Dosierbarkeit zu verbessern, kann bei Bedarf n-Heptan oder ein anderer niederer Kohlenwasserstoff in Mischung mit derartigen Paraffinen eingesetzt werden.

Zusätzlich hat es sich als besonders zweckmäßig erwiesen, zu Stabilisierungszwecken sterisch gehinderte Phenole wie 2,4-Di-tertiärbutylphenol der paraffinischen Lösung der Verbindung I zuzusetzen. Diese sind üblicherweise in Mengen bis zu 40, vorzugsweise bis zu 33 Gew.-% in der Lösung enthalten.

Die zur Herstellung der Polyphenylenether verwendeten einwertigen Phenole, die in den beiden ortho-Stellungen oder zusätzlich in einer meta-Position, nicht aber in der para-Stellung Alkylsubstituenten aufweisen, sind übliche Phenole wie 2,6-Dimethylphenol, 2,6-Diethylphenol, 2-Methyl-6-ethylphenol, 2-Methyl-6-propylphenol, 2,6-Dibutylphenol, 2,3,6-Trimethylphenol sowie Gemische dieser Phenole.

Bevorzugt ist hierbei 2,6-Dimethylphenol, das nach den in der Literatur (vgl. Houben-Weyl-Müller, Methoden der organischen Chemie, Phenole, Teil 2, Band 6/16, Georg Thieme Verlag, Stuttgart, 1976, S. 1187 ff. und dort zitierte Literatur) beschriebenen Methoden von den bei der Polymerisation störenden Phenolen, wie Phenol, o-Kresol, p-Kresol, m-Kresol und den mehrkernigen Phenolen, wie 2,6-Dimethyl-1-hydroxybiphenyl abgetrennt wird, eingesetzt.

Zur Ausführung der Polykondensation werden üblicherweise sauerstoffhaltige Gase oder Sauerstoff in die 10 bis 60, vorzugsweise 15 bis 50°C warme Lösung des Monomeren in Gegenwart eines Katalysatorkomplexes eingeleitet. Die Sauerstoffdurchflußgeschwindigkeit ist im wesentlichen die gleiche, wie sie in den US-Patentschriften 3 306 874 und 3 306 875 beschrieben ist.

Bei dem für die Polykondensation bekannten Oxidationskatalysatorkomplex handelt es sich um eine Kombination aus einem Amin und einem Kupfersalz.

Die primäre, sekundäre oder tertiäre Aminkomponente des Katalysatorkomplexes entspricht denjenigen, die in den vorgenannten Patentenschriften US-A 3 306 874 und 3 306 875 offenbart sind. Typische Vertreter derselben umfassen aliphatische Amine, in denen die aliphatische Gruppe geradkettige oder verzweigtkettige Kohlenwasserstoffe oder cycloaliphatische Kohlenwasserstoffe darstellen. Bevorzugt sind aliphatische Monoamine. Besonders bevorzugt sind Mono-, Di- und Trialkylamine, wobei die Alkylgruppen 1 bis 12 Kohlenstoffatome aufweisen. Typischerweise können Mono-, Di- und Trimethyl, Ethyl, n-Propyl, i-Propyl, n-Butyl-substituierte Amine, Mono- und Dicyclohexylamin, Ethylmethylamin, Morpholin, N-alkyl-cycloaliphatische Amine wie N-Methylcyclohexylamin verwendet werden. Weiterhin können cyclische tertiäre Amine, wie Pyridin, alpha-Collidin oder gamma-Picolin benutzt werden.

Mischungen solcher primärer, sekundärer und tertiärer Amine können falls gewünscht ebenfalls Anwendung finden. Ein besonders bevorzugtes Mono-Alkylamin ist n-Butylamin. Ein besonders bevorzugtes Dialkylamin ist Di-n-butylamin und ein besonders bevorzugtes Trialkylamin ist Triethylamin. Ein bevorzugtes cyclisches tertiäres Amin ist Pyridin. Die Konzentration des primären und sekundären Amins in der Reaktionsmischung kann innerhalb weiter Grenzen variieren. Dieselbe wird jedoch wünschenswerterweise in niedrigen Konzentrationen zugegeben. Ein bevorzugter Bereich umfaßt etwa 2,0 bis 25,0 Mol pro 100 Mol des monovalenten Phenols. Im Fall eines tertiären Amins ist der bevorzugte Bereich wesentlich höher und umfaßt von etwa 500 bis etwa 1500 Mol pro 100 Mol des monovalenten Phenols.

Typische Beispiele der Kupfer-I-Salze und der Kupfer-II-Salze, die für das Verfahren geeignet sind, finden sich in den vorgenannten Patenten. Dieselben umfassen Kupfer-I-Chlorid, Kupfer-I-Bromid, Kupfer-I-Sulfat, Kupfer-I-Azid, Kupfer-I-Tetraminsulfat, Kupfer-I-Azetat, Kupfer-I-Butyrat, Kupfer-I-Toluat, Kupfer-II-Chlorid, Kupfer-II-Bromid, Kupfer-II-Sulfat, Kupfer-II-Azid, Kupfer-II-Tetraminsulfat, Kupfer-II-Azetat, Kupfer-II-Butyrat und Kupfer-II-Toluat. Bevorzugte Kupfer-I- und Kupfer-II-Salze sind die Halogenide, Alkanoate oder Sulfate, z.B. Kupfer-I-Bromid und Kupfer-I-Chlorid, Kupfer-II-Bromid und Kupfer-II-Chlorid, Kupfer-II-Fluorid und Kupfer-II-Azetat. Mit primären und sekundären Aminen wird die Konzentration der Kupfersalze wünschenswerterweise niedrig gehalten und sie variiert vorzugsweise von etwa 0,1 bis 2,5 Mol per 100 Mol monovalentes Phenol. Mit tertiären Aminen wird das Kupfersalz vorzugsweise in einer Menge von etwa 5 bis etwa 15 Mol pro 100 Mol des einwertigen Phenols verwendet.

Der Anteil des Lösungsmittels liegt üblicherweise im Bereich 1:1 bis 20:1, d.h. maximal bis zu einem Überschuß des 20-fachen an Lösungsmittel, bezogen auf das Monomere. Geeignete Lösungsmittel sind C₇-C₁₀-Kohlenwasserstoffe wie Ethylbenzol, Xylol, Diethylbenzol oder deren Gemische, wobei vorzugsweise Ethylbenzol oder Toluol verwendet werden. Die Lösungsmittel werden bevorzugt im Bereich von 1:1 bis 10:1 Gew.-Teile, bezogen auf das monomere Phenol eingesetzt.

Darüber hinaus kann die Reaktionsmischung einen Aktivator wie ein Diarylguanidin oder ein Diarylformamidin enthalten (s. US-PS 3 544 515).

Die Polykondensationsreaktion wird insbesondere bei Temperaturen zwischen 15 und 25°C durchgeführt. Hierzu wird der Sauerstoff in die Lösung des Monomeren eingeleitet, wobei Oxidationskatalysator und die elektrisch leitfähige Verbindung I in Lösung innerhalb eines Zeitraumes von 0,1 bis 1,5 Stunden, vorzugsweise von 0,1 bis 0,5 Stunden zudosiert werden können. Bei einer besonders bevorzugten Ausführungsform des erfindungsgemäßen Verfahrens wird der Katalysator und die elektrisch leitfähige Verbindung I in Lösung vorgelegt und die entsprechende Menge Monomer während der Sauerstoffbegasung zudosiert.

Der maximale elektrische Widerstand der Reaktionslösung vor und während der Umsetzung wird z.B. mittels Meßsonden oder anderen geeigneten Meßeinrichtungen überprüft. Durch die erfindungsgemäße Verfahrensweise wird der elektrische Widerstand der Reaktionslösung vor der Reaktion drastisch verringert und steigt während der Umsetzungsreaktion nicht wesentlich an.

Wenn die Polykondensation die gewünschte Ausbeute und das Polymere das gewünschte Molekulargewicht erreicht hat, enthält die Reaktionslösung 1 bis 30 Gew.-% Polyphenylenether, 0,005 bis 1,5 Gew.-% Metallionen und etwa 0,1 bis 6,0 Gew.-% Amin sowie gegebenenfalls geringe Mengen anderer Materialien. Diese Reaktionslösungen werden mit komplexbildenden Verbindungen, wie z.B. den Natriumsalzen der Ethylendiamintetraessigsäure, der Nitrilotriessigsäure oder anderer Aminocarbonsäuren zur Abtrennung des im Polymeren enthaltenen Metallkatalysators behandelt. Die Art und Weise der Zugabe der Komplexierungsmittel ist dabei unkritisch. So können die komplexbildenden Verbindungen in Substanz ebenso wie in wäßriger Lösung in Form ihrer Alkali- oder Erdalkalisalze hinzugegeben werden. Die Zugabe kann auf einmal oder in mehreren Anteilen, kontinuierlich oder diskontinuierlich, mit und ohne zusätzliches Wasser erfolgen. Die Abtrennung der Metallkomponente kann dabei in geeigneten Verfahrensvorrichtungen, wie z.B. in Filterpressen, in Dekantationstanks, Schälzentrifugen und ähnlichem vorgenommen werden.

Die elektrisch leitfähige Verbindung I wird üblicherweise nach den obigen Methoden der Katalysatorabtrennung mitentfernt, wobei der nach dem erfindungsgemäßen Verfahren hergestellte Polyphenylenether keine nennenswerte Gehalte an Metallkationen mehr aufweist.

Die Kontaktzeit des komplexbildenden Agens mit der Polyphenylenether-Phase kann innerhalb weiter Grenzen variieren. Bevorzugt werden Reaktionszeiten von 1 Minute bis 5 Stunden. Häufig genügen Reaktionszeiten von 5 bis 30 Minuten. Die bevorzugte Reaktionstemperatur liegt zwischen 25 und 80°C, es sind jedoch auch Temperaturbereiche darunter und darüber anwendbar.

Die Abtrennung der Metallkatalysatoren bis zur vollständigen Entfernung aus dem Polyphenylenether-Polymeren kann durch mehrfache Zugabe der komplexbildenden Verbindung und anschließende Abtrennung der resultierenden Metallkomplexe gemäß der bereits beschriebenen Verfahren erfolgen. Bevorzugt wird jedoch eine Ausführungsform der Erfindung, wonach die gesamte Katalysatormenge sowie Antistatikamenge in einem Komplexier- und Separierschritt aus dem Polymeren entfernt wird.

Nach der Entfernung der metallischen Komponenten als Komplex kann der Polyphenylenether aus der Lösung nach den in den eingangs erwähnten US-Patentschriften beschriebenen Verfahren isoliert werden. Die Isolierung des Polyphenylenethers ist für die vorliegende Erfindung nicht kritisch. So kann z.B. der Polyphenylenether durch Ausfällen aus einer Reaktionslösung mit einem Antilösungsmittel, wie beispielsweise einem Überschuß von einem Alkohol, z.B. Methanol, isoliert werden. Das filtrierte Produkt kann im Alkohol aufgeschlämmt und - falls gewünscht - mit einem Entfärbungsmittel gerührt und anschließend abfiltriert werden und im Anschluß nach herkömmlichen Verfahren in Filme, Fasern, ausgeformte Gegenstände verarbeitet werden. Andere Alkohole wie Isopropanol, Propanol oder Ethanol können ebenfalls verwendet werden.

Die Aminkomponente des Katalysators kann durch Destillation oder nach anderen herkömmlichen Verfahren zurückgewonnen werden.

Die nach dem erfindungsgemäßen Verfahren hergestellten Polyphenylenether sind für alle Zwecke brauchbar, die in den vorgenannten Patenten aufgeführt sind. Beispielsweise können sie für ausgeformte Gegenstände oder für Filme, Bänder und dergleichen Anwendung finden. Sie können mit anderen Harzen oder verschiedenartigen Füllstoffen, Verstärkungsmitteln, Farbstoffen, Pigmenten, Stabilisatoren oder Weichmachern gemischt werden.

### Beispiele

In einem 1200 l Rührkessel wurden 780 kg (8465 mol) Toluol und der Oxidationskatalysator I bzw. II sowie die elektrisch leitfähige Verbindung in Form einer stabilisierten, paraffinischen Lösung vorgelegt.

Innerhalb von 8 Stunden unter Sauerstoffbegasung wurden 154,4 kg (1236 mol) 2,6-Dimethylphenol mit einer Dosiergeschwindigkeit von 19,3 kg/h zugetropft, wobei die Reaktionslösung intensiv durchmischt wurde.

Die Reaktionstemperatur betrug 25°C und die Sauerstoffmenge 2 m³/h. Die Gesamtbegasungszeit betrug 9 Stunden. Nach beendeter Polykondensation wurde die Reaktion mit 72 kg (22 mol) einer 10%igen wäßrigen Ethylendiamintetraessigsäuredinatriumlösung und 32 kg Wasser bei 70-80°C zweimal extrahiert, die wäßrige Phase bei 70 bis 80°C abgetrennt und das Lösungsmittel durch Verdampfen entfernt.

### Katalysator I

43,35 kg (470 mol) Toluol
52,20 kg (404 mol) Di-n-butylamin
0,95 kg (6,6 mol) Kupfer-I-bromid

### Katalysator II

43,35 kg (470 mol) Toluol
52,20 kg (404 mol) Di-n-butylamin
0,60 kg (3,3 mol) N,N-Di-tert.-butylethylendiamin
0,95 kg (6,6 mol) Kupfer-I-bromid.

Als elektrisch leitfähige Verbindung wurden äquimolare Mengen von Calcium-di(oleoylanthranilat) und Tris(oleoyl-N-methylglycinat)chrom(III) in 33 gew.-%iger paraffinischer Lösung verwendet, welche zusätzlich 33 Gew.-% Ditert-butylphenol enthielt. Die Gew.-%-Angaben in der Tabelle beziehen sich auf die gesamte Menge an eingesetzten obengenannten Salzen I bezogen auf 100 Gew.-% der gesamten Reaktionsmasse.

Der elektrische Widerstand der Reaktionslösung wurde nach DIN 51 412 vor Beginn und in Abständen von 10 min. während der Polykondensation bestimmt.

Der in der Tabelle angegebene Meßwert ist der maximal gemessene Widerstand der Reaktionslösung.

Die Chromgehalte des nach dem erfindungsgemäßen Verfahren hergestellten Polyphenylenethers wurden mittels Atomabsorptionsspektroskopie bestimmt.

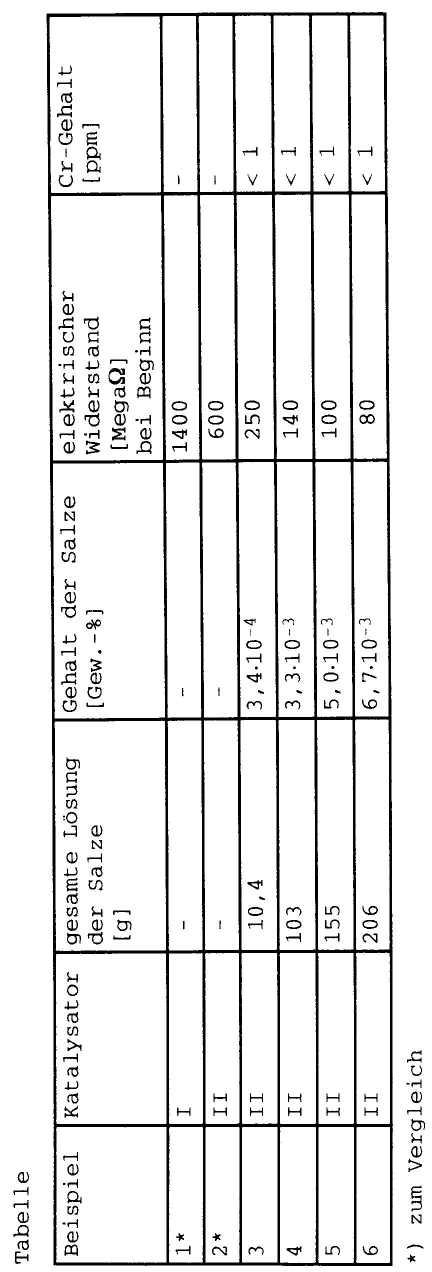

## Patentansprüche

1. Verfahren zur Herstellung von Polyphenylenethern aus einwertigen Phenolen, die in den beiden ortho-Stellungen oder zusätzlich in einer meta-Position, nicht aber in para-Stellung Alkylsubstituenten aufweisen, durch oxidative Kupplung mit sauerstoffhaltigen Gasen in Gegenwart eines Oxidationskatalysators in organischer Lösung, dadurch gekennzeichnet, daß man diese Umsetzung zur Unterdrückung der elektrostatischen Aufladung des Reaktionsgemisches zusätzlich in Gegenwart eines Carbonsäureamidderivates der allgemeinen Formel I 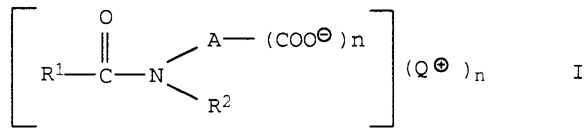 oder von Gemischen dieser Verbindungen vornimmt, in der die Substituenten bzw. n folgende Bedeutung haben:
R¹ eine gesättigte oder ein- oder mehrfach ungesättigte aliphatische Gruppe, die eine endständige Phenylengruppe oder Hydroxylgruppe tragen kann und die insgesamt 8-30 C-Atome enthält, wobei diese C-Atome auch durch isolierte C-Atome unterbrochen sein können,
R Wasserstoff oder eine C₁- bis C₄-Alkylgruppe,
A ein aliphatisches, araliphatisches oder cycloaliphatisches oder aromatisches Brückenglied mit bis zu 10 C-Atomen, und
n für eine Zahl von 1 bis 3 steht,
Q^{⊕} Ammonium, ein Alkalimetallkation oder ein Äquivalent eines Erdalkalimetallkations oder eines Kations eines Metalls der IV. bis VII. Nebengruppe des Periodensystems.

2. Verfahren nach Anspruch 1, dadurch gekennzeichnet, daß R Wasserstoff oder eine Methylgruppe ist.

3. Verfahren nach den Ansprüchen 1 und 2, dadurch gekennzeichnet, daß R¹ eine C₁₂- bis C₂₀-Alkylgruppe ist.

4. Verfahren nach den Ansprüchen 1 bis 3, dadurch gekennzeichnet, daß Q ein Natriumkation oder Calciumkation oder Chrom(-III-)-kation bedeutet.

5. Verfahren nach den Ansprüchen 1 bis 4, dadurch gekennzeichnet, daß die elektrisch leitfähige Verbindung Calciumdi(oleoylanthranilat) ist.

6. Verfahren nach den Ansprüchen 1 bis 4, dadurch gekennzeichnet, daß die elektrisch leitfähige Verbindung Tris(oleoyl-N-methylglycinat)-chrom(III) oder (Oleoyl-N-methylglycinat)Natrium ist.

7. Verfahren nach den Ansprüchen 1 bis 6, dadurch gekennzeichnet, daß die elektrisch leitfähige Verbindung in Mengen von 1·10⁻⁴ bis 0,1 Gew.-%, bezogen auf 100 Gew.-% der gesamten Reaktionsmasse, enthalten ist.

## Claims

1. A process for preparing polyphenylene ethers from monohydric phenols which have alkyl substituents in both ortho positions or additionally in one meta position but not in the para position, by oxidative coupling with oxygen-containing gases in the presence of an oxidation catalyst in organic solution, which comprises, in order to suppress the electrostatic charge of the reaction mixture, carrying out this reaction in the additional presence of a carboxamide derivative of the formula I 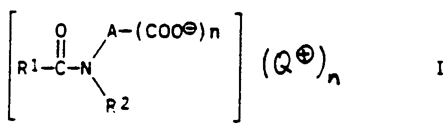 or of mixtures of these compounds, where the substituents and n have the following meanings:
R¹ is a saturated or singly or multiply unsaturated aliphatic group which can have a terminal phenylene group or hydroxyl group and which contains a total of 8-30 carbon atoms, it also being possible for these carbon atoms to be interrupted by isolated oxygen atoms,
R is hydrogen or C₁-C₄-alkyl,
A is an aliphatic, araliphatic or cycloaliphatic or aromatic bridge of up to 10 carbon atoms,
n is a number from 1 to 3,
Q^{⊕} is ammonium, an alkali metal cation or one equivalent of an alkaline earth metal cation or of a cation of a metal of group IVb to VIIb of the periodic table.

2. A process as claimed in claim 1, wherein R is hydrogen or methyl.

3. A process as claimed in claims 1 and 2, wherein R¹ is C₁₂-C₂₀-alkyl.

4. A process as claimed in claims 1 to 3, wherein Q is a sodium cation or calcium cation or chromium(III) cation.

5. A process as claimed in claims 1 to 4, wherein the electrically conducting compound is calcium di(oleoylanthranilate).

6. A process as claimed in claims 1 to 4, wherein the electrically conducting compound is chromium(III) tris(oleoyl-N-methylglycinate) or sodium oleoyl-N-methylglycinate.

7. A process as claimed in claims 1 to 6, wherein the electrically conducting compound is present in amounts of from 1·10⁻⁴ to 0.1 % by weight based on 100 % by weight of the total reaction mass.

## Revendications

1. Procédé de préparation de poly(oxyphénylène) à partir de phénols monovalents qui renferment des substituants alkyle dans les deux positions ortho ou, en plus, dans une position méta mais non en position para, par copulation par voie d'oxydation avec des gaz contenant de l'oxygène, en présence d'un catalyseur d'oxydation et dans un solvant organique, caractérisé en ce qu'afin de supprimer la charge électrostatique du mélange réactionnel, on procède à cette réaction en présence, en plus, d'un dérivé d'amide carboxylique de formule générale I 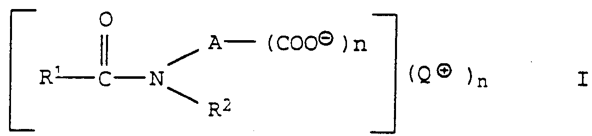 ou de mélanges de tels composés, les substituants et n ayant les significations suivantes:
R¹ groupement aliphatique saturé ou à une ou plusieurs insaturations, qui peut porter un groupement phénylène ou un groupement hydroxy en fin de chaîne et qui contient au total 8 à 30 atomes de carbone, ces atomes de carbone pouvant être aussi interrompus par des atomes d'oxygène isolés,
R atome d'hydrogène ou groupement alkyle en C₁-C₄,
A maillon de pontage aliphatique, araliphatique, cycloaliphatique ou aromatique renfermant jusqu'à 10 atomes de carbone,
n nombre de 1 à 3,
Q^{⊕} groupement ammonium, cation de métal alcalin ou équivalent d'un cation de métal alcalino-terreux ou d'un cation d'un métal des groupes IVB à VIIB de la classification périodique.

2. Procédé selon la revendication 1, caractérisé en ce que R est un atome d'hydrogène ou un groupement méthyle.

3. Procédé selon la revendication 1 ou 2, caractérisé en ce que R¹ est un groupement alkyle en C₁₂-C₂₀.

4. Procédé selon l'une quelconque des revendications 1 à 3, caractérisé en ce que Q est un cation sodium, un cation calcium ou un cation chrome(III).

5. Procédé selon l'une quelconque des revendications 1 à 4, caractérisé en ce que le composé électroconducteur est le di(oléylanthranilate) de calcium.

6. Procédé selon l'une quelconque des revendications 1 à 4, caractérisé en ce que le composé électroconducteur est le tris(oléyl-N-méthylglycinate) de chrome(III) ou l'(oléyl-N-méthylglycinate) de sodium.

7. Procédé selon l'une quelconque des revendications 1 à 6, caractérisé en ce que le composé électroconducteur est contenu dans des proportions de 1·10⁻⁴ à 0,1% en poids, par rapport à 100% en poids de la masse réactionnelle totale.
